Europäisches Patentamt

European Patent Office

Office européen des brevets

(19)

(11) Publication number: **0 302 629**
**A2**

## EUROPEAN PATENT APPLICATION

(21) Application number: 88306656.5

(22) Date of filing: 20.07.88

(51) Int. Cl.⁴: **B60T 11/20**

(30) Priority: 06.08.87 GB 8718628

(43) Date of publication of application:
08.02.89 Bulletin 89/06

(84) Designated Contracting States:
DE GB IT

(71) Applicant: LUCAS INDUSTRIES public limited
company
Great King Street
Birmingham, B19 2XF West Midlands(GB)

(72) Inventor: Price, Anthony George
14, Meadow Lane Croesyceiliog
Cwmbran Gwent, NP44 2EY Wales(GB)

(74) Representative: Waite, Anthony William et al
MARKS & CLERK Alpha Tower Suffolk Street
Queensway
Birmingham B1 1TT(GB)

(54) **Master cylinder assembly.**

(57) A master cylinder assembly has a pair of master cylinders each with a quick-fill chamber (17A) and a pressure chamber (16A). The pressure chambers (16A) are interconnected by a transfer passage (9) to provide pressure compensation during braking. A centre valve (31) is carried by each pressure piston (18) and has an axially extending rod (32) supported in an axial tubular extension (33) of an end closure member (34). A hollow portion (42) of the piston (18) telescopes over the extension (33) during actuation and enables an axially compact arrangement to be obtained.

EP 0 302 629 A2

FIG. 3

## MASTER CYLINDER ASSEMBLY.

This invention relates to a master cylinder assembly, primarily for a vehicle hydraulic braking system, and of the general kind having a pair of master cylinders between which extends a transfer passage controlled by valve means to permit communication between the master cylinders when the cylinders are actuated simultaneously and to prevent such communication when one of the cylinders is operated individually. Such an assembly is of particular use in an agricultural tractor, for example, in which normal straight-line braking is accomplished by the simultaneous actuation of a pair of cylinders and steering assistance can be provided by actuating one or other of the cylinders individually.

It can be desirable for each master cylinder of such an assembly to incorporate a so-called "quick-fill" chamber which acts to supply a relatively large volume of fluid to an associated brake in the initial stage of a brake application in order to effect rapid take-up of braking clearances. A prior proposal of this kind is shown in our British Patent GB 2129520B which illustrates a master cylinder assembly in which a transfer passage interconnects the relatively low pressure quick-fill chambers and provides pressure compensation during the initial low-pressure braking phase. Most problems of imbalance between the master cylinders tend to arise during initial application of the brakes and since our aforesaid prior arrangement provides compensation during this initial stage, it operates generally satisfactorily under most conditions. However, since the high pressure braking phase then takes place in isolation from the transfer passage any small pressure difference between the pressure cylinders inevitably leads to uneven braking, which, although tolerable under normal braking conditions, can assume importance during heavy braking, as in an emergency for example, when untoward deviation from straight-line braking could result.

An object of the present invention is to provide a master cylinder assembly of the aforesaid kind in which the pressure cylinders are provided with a "quick-fill" facility and in which true pressure compensation is achieved.

According to the present invention, in a master cylinder assembly of the aforesaid general kind each master cylinder is provided with a quick-fill chamber and a high pressure chamber, and a transfer passage extends between the high pressure chambers, valve means being provided and operating to control fluid flow between said high pressure chambers.

In one convenient arangement, respective valve means are provided on each cylinder, each such valve means being movable by an associated pressure piston during working travel of the latter.

Preferably, each pressure piston has a recuperation passage therein providing communication between the pressure cylinder and a fluid reservoir, each pressure piston being associated with further valve means operable to close said passage upon movement of the piston in a brake applying direction.

Typically, said further valve means is actuated by an axially extending rod supported from support means disposed at the closed forward end of the cylinder, each piston conveniently having a hollow forward end portion such as to receive part of said support means therein when the pistons move towards the forward extremity of their working travel. This arrangement enables the axial length of each master cylinder to be reduced as compared with some conventional arrangements.

The invention will now be described, by way of example, with reference to the accompanying drawings in which:-

Figure 1 is a plan view of one form of master cylinder assembly of the invention;

Figure 2 is an end view of the master cylinder assembly of Figure 1, and

Figure 3 is a side view to an enlarged scale, partly in longitudinal cross-section, of part of the assembly of Figures 1 and 2.

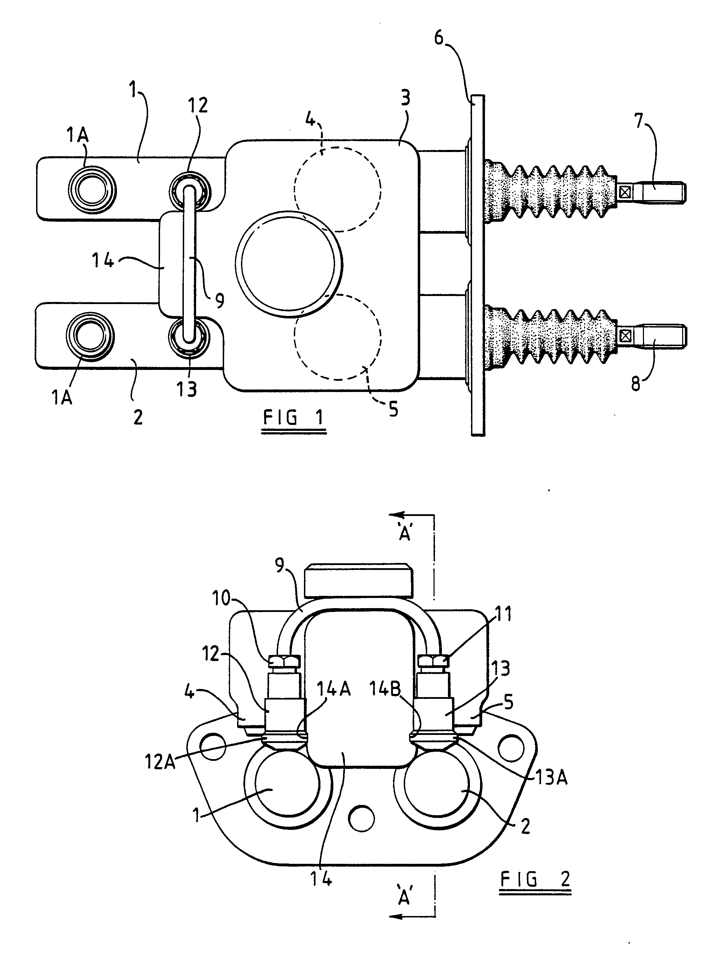

Referring to the drawings, these illustrate a master cylinder assembly which includes a pair of master cylinders 1, 2 fed from a common reservoir 3 having respective connections 4 and 5 with the cylinders. Although illustrated as separate cylinders, the master cylinders may alternatively be formed in a common body. Pressure fluid outlets 1A are provided towards the forward ends of the cylinders. The cylinders are provided with a common mounting flange 6 enabling the assembly to be mounted on a convenient support such as a vehicle bulk head, for example. Respective force input rods 7, 8 for the two pressure cylinders would normally be connected to driver-operated pedals which may be latched together for simultaneous operation of the cylinders in order to effect straight-line retardation, but which may be unlatched for independent operation so that one or other cylinder may be actuated individually in order to effect a spin turn of the vehicle. As seen more clearly in Figure 2, the cylinders 1 and 2 are interconnected by a transfer passage formed by a pipe 9 secured by pipe nuts 10, 11 to respective bosses 12, 13 welded to the outer surfaces of the cylinders.

The reservoir 3 is provided with an axially projecting portion 14 which extends downwardly into engagement with the outer surfaces of the cylinders 1, 2 and is notched at opposed locations 14A, 14B for snap engagement with projecting rims 12A, 13A formed respectively on the port connections 12 and 13. Such snap engagement holds the reservoir extension 14 securely in engagement with the cylinders 1 and 2 and results in a secure and stable arrangement.

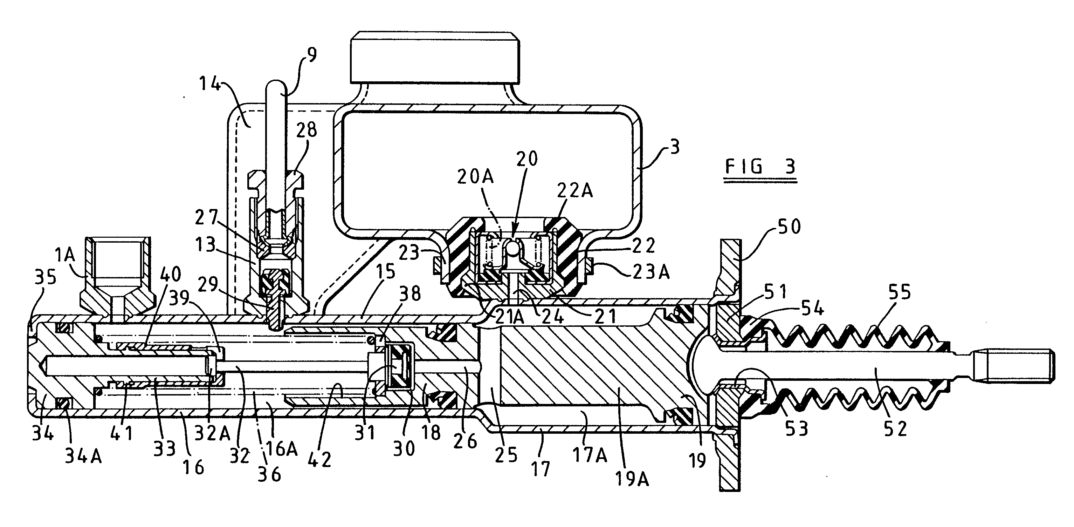

The cylinders 1 and 2 are identical in construction and operation and one of them will now be described in more detail in relation to Figure 3. The cylinder is formed by a thin-walled drawn steel tube which is stepped to form a smaller diameter pressure cylinder 16 defining a pressure chamber 16A and a larger diameter quick-fill cylinder 17 defining a chamber 17A, the two chambers having respective pistons 18, 19 slidable therein. The pistons may conveniently form part of a single integral piston assembly, as illustrated, being joined by a connecting portion 19A.

The quick-fill chamber 17A communicates with the reservoir 3 by way of a conventional pressure limiting ball valve assembly the construction and operation of which is described in our earlier Patent BP 2129520. The valve assembly 20 is housed within an inlet port connection 21 secured, as by welding, to the exterior of the quick-fill cylinder 17. A grommet-type seal 22 surrounds the port connection 21, being axially located on an enlarged rib 21A of the port connection, and receives a neck 23 of the reservoir in surrounding relationship. A portion 22A of the grommet 22 extends radially inwardly over a part of the valve assembly 20 to hold the latter in position within the port connection 21. The neck 23 may be clamped onto the grommet by a surrounding band 23A, if required.

Communication between the reservoir 3 and pressure chamber 16A is established by way of an outlet port 24 formed in the port connection 21 and via radial and axial passages 25, 26 formed in the piston assembly.

The compensation port connector boss 13 houses a seat member 27 against which a flared end of the pipe 9 is clamped, in conventional manner, by a pipe nut 28. The port connector also houses a valve member 29, of which an end portion projects within the chamber 16 for engagement, during working travel of the piston 18, with the outer surface of this piston. When the valve member 29 is engaged with the piston in this manner, the valve member is held open to permit flow of fluid through the pipe 9 into the other cylinder, which occurs when the corresponding valve member is also open, i.e. when the pistons of both cylinders are actuated simultaneously for normal vehicle retardation. When only one cylinder is operational, in order to effect a spin turn of the vehicle, the pressure from the operative piston applied to the valve member 29 of the inoperative cylinder effectively holds that valve member closed and prevents communication between the cylinders.

The piston 18 is formed with a recess 30 which communicates with the passage 26 and which houses a centre valve element 31 of which a rod 32 extends axially towards the forward end of the cylinder and is supported within a tubular extension 33 of an end member 34 which is lodged against an inwardly turned flange 35 of the tube 15 and forms a closure member for the open end of the tube. The end member is sealed against the cylinder internal wall by a seal 34A. A head 32A of the rod 32 abuts against a shoulder 39 on a retainer formed by a sleeve 40, conveniently of plastics material, which is closely engaged over the tubular extension 33 and held in position thereon by snap-engagement over an outwardly projecting rib 41 on the extension 33. The end member 34 is held in place by a spring 36 acting between that member and a retaining ring 38 for the valve member 31, carried by the piston 18, the spring 36 urging the pistons, 18, 19 towards their inoperative positions.

A forward end portion of the piston 18 is hollow and provides a recess 42 of sufficient size to enable the piston to move telescopically over the tubular extension 33 during the piston working travel. This arrangement enables the length of the pressure cylinder to be minimised and contributes to the compact proportions of the master cylinder. The effective telescoping of the centre valve element 31 within the piston 18 further contributes to the compact axial dimension of the master cylinder.

When the master cylinders are in their inoperative positions, as illustrated, the quick-fill chambers 17A are in communication via the ports 24 and valve mechanisms 20 with the reservoir 3. The centre valves 31 are also in their open positions so that the pressure cylinders 16A are in communication with the reservoir via the passages 25, 26 and ports 24. The transfer passage control valves 29 are in their lowered positions in which a flow path through the transfer passage is provided in order to accommodate heat expansion of the fluid in the transfer passage.

Initial actuation movement of the piston assemblies causes flow of fluid from the quick-fill chamber 17A through the radial passage 25 and axial passage 26 into chambers 16A. This produces an increased volume of fluid which effects rapid take up of braking tolerances. During such initial movement of the piston assemblies, valves 20 are closed, preventing fluid from chambers 17A returning to the reservoir 3. After this rapid take up of tolerances, the pressure in chamber 16A increases to overcome the pressure difference of chamber 17A, thereby inducing valve 30 to close. Pressure build up in chamber 17A now acts on valve 20 to overcome the pressure of a spring 20A, thereby opening valve 20 and allowing excess fluid in chamber 17A to return to the reservoir. Continued forward movement of the pistons causes the valve members 29 of the transfer passage 9 to be upwardly displaced, in the manner referred to previously, in order to permit unrestricted communication between the pressure cylinders 16A, thereby enabling automatic pressure compensation between the cylinders to occur. The aforesaid simultaneous operation of both master cylinders enables normal straight line vehicle retardation to be obtained.

In the event that a spin turn is required, operation of only one of the master cylinders is effected, with the quick-fill and pressure chambers operating as before. However, pressure applied from the actuated cylinder through the transfer passage 9 has the effect of closing the valve member 29 of the other cylinder in order to permit adequate pressure build-up in the actuated cylinder.

A surrounding flange 50 is secured to the quick-fill cylinder portion 17 and serves to mount the assembly on a fixed support (not shown). A washer 51 is a push fit within the open cylinder end and acts to retain a force input rod 52 in position for transit purposes. It also supports a generally cylindrical boot retainer 53 over which is engaged a bead 54 of a sealing boot 55 surrounding the rod 52. When the flange 50 is secured to said fixed support, the washer 51 lies against a surface of the latter to transmit rod return forces to the support, enabling the rod to function as a pedal backstop.

It will be seen that the arrangement of the invention enables true pressure compensation to be obtained between the master cylinders. The disposition of the centre valve 31 within the piston 18 and the telescopic relationship possible between the piston 18 and extension 33 enables an axial compactness to be achieved which is not possible in some conventional master cylinders.

## Claims

1. A master cylinder assembly comprising a pair of master cylinders (1, 2) between which extends a transfer passage (9) controlled by valve means (29) to permit communication between the master cylinders when the cylinders are actuated simultaneously and to prevent such communication when one of the cylinders is operated individually, each master cylinder (1, 2) being provided with a quick-fill chamber (17A) and a high pressure chamber (16A), characterised in that a transfer passage (9) extends between the high pressure chambers (16A) and valve means (29) are provided and operable to control fluid flow between said high pressure chambers (16A).

2. A master cylinder assembly according to Claim 1 characterised in that respective valve means (29) are provided on each cylinder (1, 2), each such valve means being movable by an associated pressure piston (18) during working travel of the latter.

3. A master cylinder assembly according to Claim 2 characterised in that each pressure piston (18) has a recuperation port (26) therein providing communication between the pressure cylinder (16A) and a fluid reservoir (3), each pressure piston being associated with further valve means (31) operable to close said passage upon movement of the piston (18) in a brake-applying direction.

4. A master cylinder assembly according to Claim 3 characterised in that said further valve means (30) is actuated by an axially extending rod (32) supported from support means (33) disposed at the closed forward end of the cylinder.

5. A master cylinder assembly according to Claim 4 characterised in that each pressure piston (18) has a hollow forward portion (42) such as to receive part of said support means (33) therein when the pistons move towards the forward extremity of their working travel.

6. A master cylinder assembly according to any one of Claims 3 to 5 characterised in that said further valve means is a centre valve of which a valve element (30) is housed within the pressure piston (18) and co-operates with a valve port (26) formed in the piston.

7. A master cylinder assembly according to any one of the preceding claims, characterised in that each pair of quick-fill and pressure pistons (18, 19) is rigidly interconnected by a connecting portion (19A).

8. A master cylinder assembly according to Claim 7 characterised in that said connecting portion (19A) contains a passage through which a reservoir outlet port (24) communicates with the high pressure chamber (16A).

9. A master cylinder assembly according to any one of Claims 4 to 8 characterised in that said support means (33) is carried by an end member (34) which forms a closure for one end of the cylinder.

10. A master cylinder assembly according to any one of Claims 4 to 9 characterised in that said rod (32) is retained relative to said support means (33) by a retention device (40) mounted on the extension.

11. A master cylinder assembly according to any one of the preceding claims, characterised in that said transfer passage is formed by a pipe (9) connected to respective bosses (13) of the cylinders, a part of the reservoir (3) extending between said bosses for location by the latter.

12. A master cylinder according to Claim 11 characterised in that the reservoir is supported by engagement with the cylinders.

FIG 1

FIG 2

FIG 3